(19) Europäisches Patentamt
European Patent Office
Office européen des brevets

(11) **EP 2 963 316 A1**

(12) **EUROPEAN PATENT APPLICATION**
published in accordance with Art. 153(4) EPC

(43) Date of publication:
**06.01.2016 Bulletin 2016/01**

(51) Int Cl.:
**F16H 61/08** (2006.01)   **B60K 6/365** (2007.10)
**B60K 6/387** (2007.10)   **B60K 6/445** (2007.10)
**B60W 10/02** (2006.01)   **B60W 10/08** (2006.01)
**B60W 20/00** (2016.01)   **E02F 9/20** (2006.01)
**F16H 3/46** (2006.01)   **F16H 3/62** (2006.01)
**F16H 3/72** (2006.01)   **F16H 61/66** (2006.01)
**F16H 63/50** (2006.01)

(21) Application number: **14871837.2**

(22) Date of filing: **10.12.2014**

(86) International application number:
**PCT/JP2014/082706**

(87) International publication number:
**WO 2015/093371 (25.06.2015 Gazette 2015/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.12.2013   JP 2013259380**

(71) Applicant: **Komatsu Ltd.
Minato-ku
Tokyo 107-8414 (JP)**

(72) Inventors:
• **MONDEN, Hiroshi
Hiratsuka-shi
Kanagawa 254-8567 (JP)**

• **MIYAMOTO, Shunsuke
Hiratsuka-shi
Kanagawa 254-8567 (JP)**
• **KISHIMOTO, Yasuki
Hiratsuka-shi
Kanagawa 254-8567 (JP)**
• **MIYAZAKI, Shogo
Hiratsuka-shi
Kanagawa 254-8567 (JP)**
• **OHKURA, Yasunori
Hiratsuka-shi
Kanagawa 254-8567 (JP)**

(74) Representative: **Flügel Preissner Kastel Schober
Patentanwälte PartG mbB
Nymphenburger Strasse 20a
80335 München (DE)**

(54) **WORK VEHICLE AND METHOD FOR CONTROLLING WORK VEHICLE**

(57)    When a clutch is in the disengaged state, the predicted engagement time determining unit determines a predicted engagement time. The predicted engagement time is the predicted value for the time required from the beginning of the clutch engagement until engagement is complete. The speed ratio parameter estimating unit determines an estimated value for a speed ratio parameter after the elapse of the predicted engagement time from the current point in time. When the estimated value for the speed ratio parameter reaches a mode-switching threshold value, a clutch control unit outputs a clutch command signal for causing the clutch to engage.

FIG. 6

EP 2 963 316 A1

## Description

## Field of the Invention

The present invention relates to a work vehicle and a control method therefor.

## Description of the Related Art

An invention provided with a power-transmission device (referred to hereinbelow as a "torque converter-type transmission") having a torque converter and a multi-stage speed change gear is well known as a work vehicle such as a wheel loader. However, recently hydraulic mechanical transmissions (HMT) and electric-mechanical transmissions (EMT) have become known as power-transmission devices in place of torque converter-type transmissions.

As disclosed in Patent Document 1, an HMT has a gear mechanism and a motor connected to rotation elements of the gear mechanism, and a portion of the driving power from the engine is converted to hydraulic pressure and transmitted to a travel device, and the remaining portion of the driving power is mechanically transmitted to the travel device.

The HMT is provided with a planetary gear mechanism and a hydraulic motor, for example, in order to allow continuous speed variation. A first element among the three elements of a sun gear, a carrier, and a ring gear of the planetary gear mechanism is coupled to an input shaft, and a second element is coupled to an output shaft. A third element is coupled to the hydraulic motor. The hydraulic motor functions as either a motor or a pump in response to the travel state of the work vehicle. The HMT is configured to enable stepless changing of the rotation speed of the output shaft by changing the rotation speed of the hydraulic motor.

An electric motor may be used in an EMT in place of the hydraulic motor in the HMT. The electric motor functions as either a motor or a generator in response to the travel state of the work vehicle. Similar to the HMT, the EMT is configured to enable stepless changing of the rotation speed of the output shaft by changing the rotation speed of the electric motor.

## Prior Art Documents

## References

Patent document 1: Japanese Laid-open Patent 2006-329244

## Summary of the Invention

## Technical Problem

The transmission path for motive power in the HMT or the EMT may be switched between two modes.

It is known that a relatively small power transmission device is able to bring about a wide speed ratio in the HMT or the EMT that allows switching between a plurality of modes in this way. One of the modes is a mode for low-speed traveling (referred to below as "low-speed mode") and the other mode is a mode for high-speed traveling (referred to below as "high-speed mode"). The switching of the modes is carried out, for example, in accordance with the speed ratio of the power transmission device. When the speed ratio is equal to or lower than a predetermined mode-switching threshold, the low-speed mode is selected. When the speed ratio is greater than the mode-switching threshold, the high-speed mode is selected.

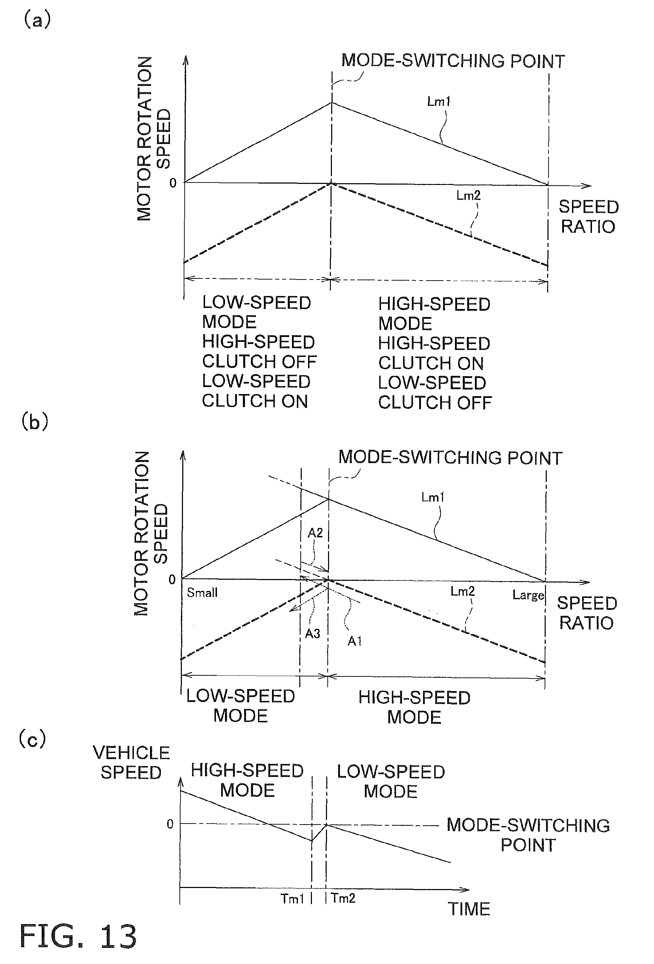

FIG. 13(a) illustrates changes in the rotation speed of the motor in the modes. The horizontal axis depicts the speed ratio of the power transmission device and the vertical axis depicts the motor rotation speed in the graphs in FIG. 13. The solid line Lm1 depicts the rotation speed of a first motor and the dashed line Lm2 depicts the rotation speed of a second motor.

The rotation speed of the first motor increases and the rotation speed of the second motor decreases in response to an increase in the speed ratio in the low-speed mode. In this case, the first motor generates driving power and the second motor regenerates energy. The rotation speed of the first motor decreases and the rotation speed of the second motor increases in response to an increase in the speed ratio in the high-speed mode. In this case, the first motor regenerates energy and the second motor generates driving power.

The switching between the modes described above is carried out by switching two clutches provided in a gear mechanism. That is, the gear mechanism has a clutch for high-speed mode (referred to below as "high-speed clutch") and a clutch for low-speed mode (referred to below as "low-speed clutch"), and the low-speed clutch is engaged and the high-speed clutch is disengaged in the low-speed mode. The low-speed clutch is disengaged and the high-speed clutch is engaged in the high-speed mode. For example, when switching from the high-speed mode to the low-speed mode, the low-speed clutch is switched from the disengaged state (off) to the engaged state (on) while the high-speed clutch is in the engaged state (on). When the engagement of the low-speed clutch is confirmed, the high-speed clutch is switched from the engaged state (on) to the disengaged state (off). Therefore, a state of both the high-speed clutch and the low-speed clutch being engaged at the same time occurs momentarily at the mode switching point.

In order to reduce as much as possible sudden changes in the vehicle speed or fluctuations in the torque and for enabling the switching between modes to be carried out smoothly in the HMT or the EMT, it is desirable that the switching of the clutches be carried out instantly. However, a certain amount of time is required from when the engagement of the clutch is started due to the output of a command signal to the clutch until the engagement is completed. As a result, it is difficult to carry out the switching of the clutches instantly.

For example, a case is assumed in which the work vehicle slows down and the modes are switched from the high-speed mode to the low-speed mode as can be seen with arrow A1 in FIG. 13(b). When a command signal is outputted to switch the clutches when the speed ratio has reached the mode switching point, the speed ratio becomes a value smaller than the mode switching point while the high-speed mode is being kept because an amount of time is taken until the engagement of the low-speed clutch is completed. Then, a state is entered in which both the low-speed clutch and the high-speed clutch are engaged when the engagement of the low-speed clutch is completed. As a result, the speed ratio is returned to the mode switching point as depicted by arrow A2. At this time the speed ratio increases. Then the mode is transferred to the low-speed mode due to the disengagement of the high-speed clutch and the speed ratio decreases again as depicted by arrow A3.

FIG. 13(c) illustrates changes in the vehicle speed according to the elapse of time of the above phenomenon. As illustrated in FIG. 13(c), the vehicle speed of the work vehicle increases during the period from the point in time Tm1 that the speed ratio reaches the mode switching point until the point in time Tm2 that the engagement of the low-speed clutch is completed. Therefore, a work vehicle that is slowing down accelerates temporarily. This phenomenon causes discomfort to the operator.

An object of the present invention is to provide a work vehicle that is able to reduce the feeling of discomfort of the operator when the driving power transmission path is switched in a HMT or an EMT type power transmission device, and a control method for the work vehicle.

**Solution to Problem**

A work vehicle according to a first aspect of the present invention is equipped with an engine, a hydraulic pump, a work implement, a travel device, a power transmission device, and a control unit. The hydraulic pump is driven by the engine. The work implement is driven by hydraulic fluid discharged from the hydraulic pump. The travel device is driven by the engine. The power transmission device transmits driving power from the engine to the travel device. The control unit controls the power transmission device.

The power-transmission device has an input shaft, an output shaft, a gear mechanism, a motor, and a clutch. The gear mechanism has a planetary gear mechanism and transmits the rotation of the input shaft to the output shaft. The motor is connected to a rotating element of the planetary gear mechanism. The clutch switches the transmission path for the driving power in the power transmission device from a first mode to a second mode. The clutch is in a disengaged state when the transmission path is in the first mode. The clutch is in an engaged state when the transmission path is in the second mode.

The power transmission device is configured so that a speed ratio of the output shaft with respect to the input shaft is changed by changing the rotation speed of the motor. When a speed ratio parameter corresponding to the speed ratio is at a predetermined mode-switching threshold, the rotation speed ratio of the motor with respect to the input shaft in the first mode is equal to the rotation speed ratio of the motor with respect to the input shaft in the second mode.

The control unit has a predicted engagement time determining unit, a speed ratio parameter estimating unit, and a clutch control unit. When a clutch is in the disengaged state, the predicted engagement time determining unit determines a predicted engagement time. The predicted engagement time is the predicted value of the time required from the start of the engagement of the clutch until the completion of the engagement. The speed ratio parameter estimating unit determines an estimated value for the speed ratio parameter after the elapse of the predicted engagement time from the current point in time. When the estimated value for the speed ratio parameter reaches a mode-switching threshold value, the clutch control unit outputs a clutch command signal for causing the clutch to be engaged.

In this case, the predicted engagement time is taken into consideration and the clutch command signal is outputted before the speed ratio parameter reaches the mode-switching threshold As a result, the engagement of the clutch can be completed at the point in time the speed ratio parameter approximately reaches the mode-switching threshold. Consequently, the modes can be switched promptly when the speed ratio parameter reaches the mode-switching threshold.

The work vehicle preferably is further equipped with an oil temperature detecting unit. The clutch is a hydraulic clutch and the oil temperature detecting unit detects the temperature of the hydraulic fluid supplied to the clutch. The control unit further includes a storage unit. The storage unit stores predicted engagement time information. The predicted engagement time information stipulates the relationship between an engagement time parameter which includes the temperature of the hydraulic fluid and the predicted engagement time. The predicted engagement time determining unit determines the predicted engagement time on the basis of the temperature of the hydraulic fluid detected by the oil temperature detecting unit and the predicted engagement time information.

In this case, the predicted engagement time can be predicted with better accuracy through the use of the temperature of the hydraulic fluid supplied to the clutch.

The speed ratio parameter estimating unit preferably records the speed ratio parameter at prescribed time periods and derives a rate of change of the speed ratio parameter from the recorded speed ratio parameters. The speed ratio parameter estimating unit then determines an estimated value of the speed ratio parameter from the rate of change of the speed ratio parameter. In this case, the estimated value of the speed ratio parameters can be estimated with greater accuracy through the use of the records of changes in the speed ratio parameters.

The control unit preferably further has a motor control unit and a target locus determining unit. The motor control unit controls the motor. The target locus determining unit determines a target locus. The target locus is a target locus of changes in the speed ratio parameter from the point in time of a clutch command signal output until the point in time that the predicted engagement time has elapsed. The motor control unit controls the motor so that the speed ratio parameter changes in accordance with the target locus during the period from the point in time of the clutch command signal output until the point in time that the predicted engagement time has elapsed.

In this case, the speed ratio parameters can be corrected to follow the target locus by controlling the motor even if an outside force on the work vehicle changes suddenly after the output of the clutch command signal. That is, any impact on the speed ratio from an outside force is mitigated by controlling the motor. As a result, a major change in the speed ratio parameters from the estimation by the speed ratio parameter estimating unit can be suppressed. Consequently, even if an outside force changes suddenly such as when, for example, a brake is applied or excavating is started after the clutch command signal has been outputted, the clutch can be switched at a good timing when the speed ratio parameters reach the mode-switching threshold.

The rate of change of the speed ratio with regard to the rotation speed of the motor in the first mode preferably is different from the rate of change of the speed ratio with regard to the rotation speed of the motor in the second mode.

A control method according to a second embodiment of the present invention is a control method for a work vehicle provided with a power transmission device. The power-transmission device has an input shaft, an output shaft, a gear mechanism, a motor, and a clutch. The gear mechanism has a planetary gear mechanism and transmits the rotation of the input shaft to the output shaft. The motor is connected to a rotating element of the planetary gear mechanism. The clutch switches the transmission path for the driving power in the power transmission device from a first mode to a second mode. The clutch is in a disengaged state when the transmission path is in the first mode. The clutch is in an engaged state when the transmission path is in the second mode.

The power transmission device is configured to change the speed ratio of the output shaft with respect to the input shaft by changing the rotation speed of the motor. When a speed ratio parameter corresponding to the speed ratio is at a predetermined mode-switching threshold, the rotation speed ratio of the motor with respect to the input shaft in the first mode is equal to the rotation speed ratio of the motor with respect to the input shaft in the second mode.

The control method includes the following steps. A first step involves the determination of a predicted engagement time which is a predicted value of the time required from the start of the engagement of the clutch until the completion of the engagement when the clutch is in a disengaged state. A second step involves determining an estimated value for the speed ratio parameter after the elapse of the predicted engagement time from the current point in time. A third step involves outputting a clutch command signal for causing the clutch to be engaged when the estimated value for the speed ratio parameter reaches a mode-switching threshold value.

In this case, the predicted engagement time is taken into consideration and the clutch command signal is outputted before the speed ratio parameter reaches the mode-switching threshold As a result, the engagement of the clutch can be completed at the point in time the speed ratio parameter generally reaches the mode-switching threshold. Consequently, the clutches can be switched promptly when the speed ratio parameter reaches the mode-switching threshold.

**Effects of Invention**

According to the present invention, a work vehicle that is able to reduce the feeling of discomfort of the operator when the driving power transmission path is switched in a HMT or an EMT type power transmission device, and a control method for the work vehicle can be provided.

**Brief Description of Drawings**

FIG. 1 is a side view of a work vehicle according to an embodiment.
FIG. 2 is a schematic view of a configuration of the work vehicle.
FIG. 3 is a schematic view of a configuration of a power transmission device.
FIG. 4 illustrates changes in the rotation speeds of a first motor and a second motor with respect to the speed ratio in the power transmission device.
FIG. 5 depicts collinear graphs illustrating relationships between the number of teeth of gears and the rotation speeds of the elements of a first planetary gear mechanism and a second planetary gear mechanism.
FIG. 6 is a control block diagram depicting processing executed by the control unit according to a first embodiment.
FIG. 7 is a graph illustrating a method for determining an estimated speed ratio by a speed ratio parameter estimating unit.

FIG. 8 is a control block diagram depicting processing executed by the control unit according to a second embodiment.

FIG. 9 illustrates an example of a target locus.

FIG. 10 illustrates changes in the speed ratio when an external force changes greatly after the point in time a clutch command signal is outputted in a work vehicle according to a comparative example.

FIG. 11 is a schematic view of a configuration of a power transmission device according to another embodiment.

FIG. 12 illustrates changes in the rotation speeds of the first motor and the second motor with respect to the speed ratio in the power transmission device according to another embodiment.

FIG. 13 illustrates changes in the rotation speed of a motor in a high-speed mode and a low-speed mode according to the prior art.

**Description of Embodiments**

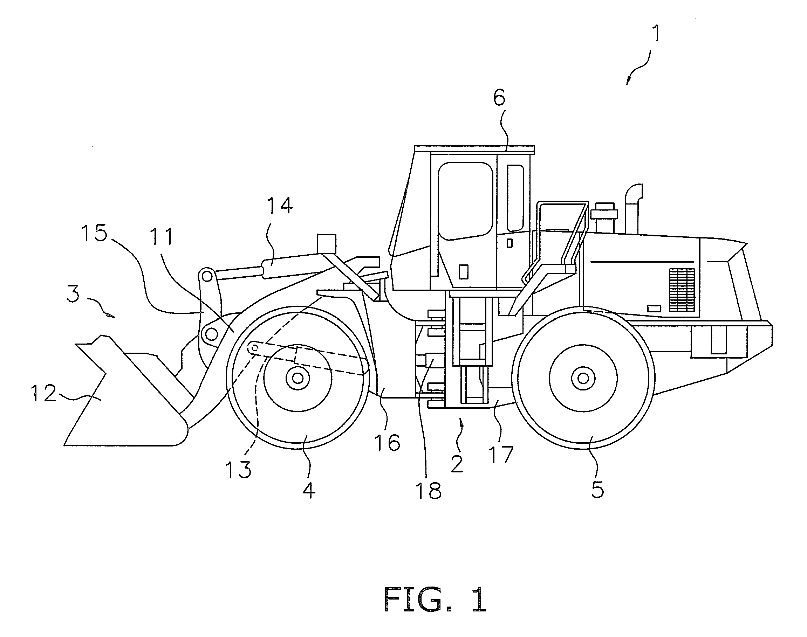

Embodiments of the present invention will be explained in detail with reference to the figures. FIG. 1 is a side view of a work vehicle 1 according to an embodiment of the present invention. As illustrated in FIG. 1, the work vehicle 1 is equipped with a vehicle body frame 2, a work implement 3, traveling wheels 4 and 5, and an operating cabin 6. The work vehicle 1 is a wheel loader and travels due to the traveling wheels 4 and 5 being rotated and driven. The work vehicle 1 is able to carry out work such as excavation by using the work implement 3.

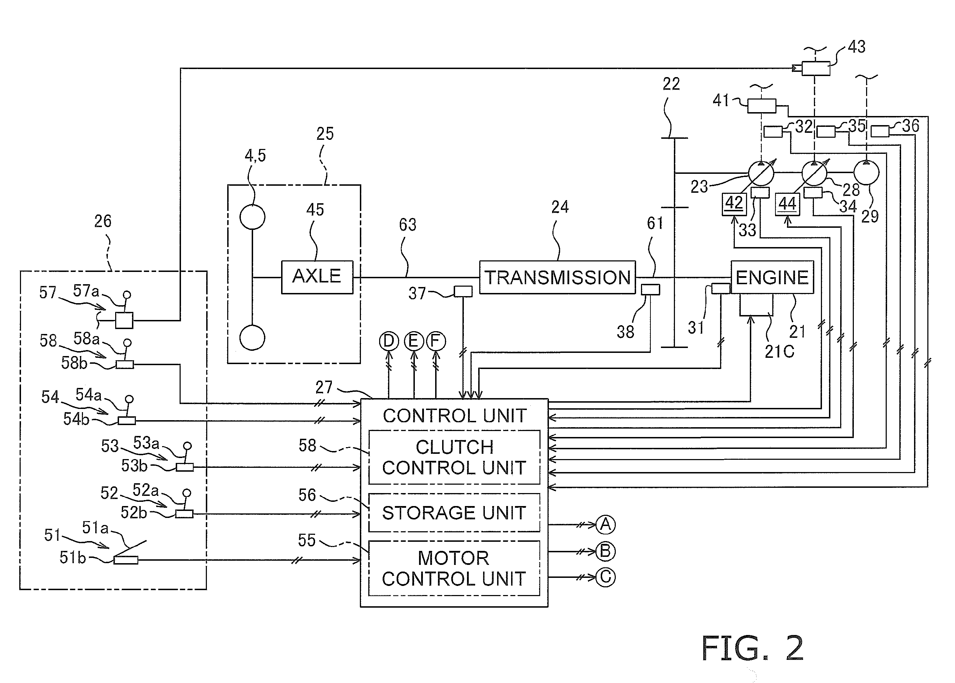

The work implement 3 and the traveling wheels 4 are attached to the vehicle body frame 2. The work implement 3 is driven by hydraulic fluid from a belowmentioned work implement pump 23 (see FIG. 2). The work implement 3 has a boom 11 and a bucket 12. The boom 11 is mounted on the vehicle body frame 2. The work implement 3 includes a lift cylinder 13 and a bucket cylinder 14. The lift cylinder 13 and the bucket cylinder 14 are hydraulic cylinders. One end of the lift cylinder 13 is attached to the vehicle body frame 2. The other end of the lift cylinder 13 is attached to the boom 11. The boom 11 swings up and down due to the extension and contraction of the lift cylinder 13 due to hydraulic fluid from the work implement pump 23. The bucket 12 is attached to the tip of the boom 11. One end of the bucket cylinder 14 is attached to the vehicle body frame 2. The other end of the bucket cylinder 14 is attached to the bucket 12 via a bell crank 15. The bucket 12 swings up and down due to the extension and contraction of the bucket cylinder 14 due to hydraulic fluid from the work implement pump 23.

The operating cabin 6 and the traveling wheels 5 are attached to the vehicle body frame 2. The operating cabin 6 is mounted on the vehicle body frame 2. A seat for the operator and a belowmentioned operating device are disposed in the operating cabin 6. The vehicle body frame 2 has a front frame 16 and a rear frame 17. The front frame 16 and the rear frame 17 are attached to each other in a manner that allows swinging in the left-right direction.

The work vehicle 1 has a steering cylinder 18. The steering cylinder 18 is attached to the front frame 16 and the rear frame 17. The steering cylinder 18 is a hydraulic cylinder. The advancing direction of the work vehicle 1 can be changed to the right and left with the extension and contraction of the steering cylinder 18 due to hydraulic fluid from a belowmentioned steering pump 28.

FIG. 2 is a schematic view of a configuration of the work vehicle 1. As illustrated in FIG. 2, the work vehicle 1 is equipped with an engine 21, a PTO 22, a power transmission device 24, a travel device 25, an operating device 26, and a control unit 27.

The engine 21 is, for example, a diesel engine. The output of the engine 21 is controlled by adjusting the amount of fuel injected into the cylinders of the engine 21. The adjustment of the amount of fuel is conducted by the control unit 27 controlling a fuel injection device 21C attached to the engine 21. The work vehicle 1 is equipped with an engine rotation speed detecting unit 31. The engine rotation speed detecting unit 31 detects the engine rotation speed and transmits a detection signal indicating the engine rotation speed to the control unit 27.

The work vehicle 1 has the work implement pump 23, the steering pump 28, and a transmission pump 29. The work implement pump 23, the steering pump 28, and the transmission pump 29 are hydraulic pumps. The PTO 22 transmits a portion of the driving power from the engine 21 to the hydraulic pumps 23, 28, and 29. That is, the PTO 22 distributes the driving power from the engine 21 to the power transmission device 24 and the hydraulic pumps 23, 28, and 29.

The work implement pump 23 is driven by driving power from the engine 21. The hydraulic fluid discharged from the work implement pump 23 is supplied to the lift cylinder 13 and the bucket cylinder 14 through a work implement control valve 41. The work vehicle 1 is equipped with a work implement pump pressure detecting unit 32. The work implement pump pressure detecting unit 32 detects a discharge pressure (referred to below as "work implement pump pressure") of hydraulic fluid from the work implement pump 23 and transmits a detection signal indicating the work implement pump pressure to the control unit 27.

The work implement pump 23 is a variable displacement hydraulic pump. The discharge capacity of the work implement pump 23 is changed by changing the tilt angle of a skew plate or an inclined shaft of the work implement pump 23. A first capacity control device 42 is connected to the work implement pump 23. The first capacity control device 42 is controlled by the control unit 27 and changes the tilt angle of the work implement pump 23. As a result, the discharge capacity of the work implement pump 23 is controlled by the control unit 27. The work vehicle 1 is equipped with a first tilt angle detecting unit 33. The first tilt angle detecting unit 33 detects the tilt angle of the work implement pump 23 and transmits a detection signal indicating the tilt angle to the control unit 27.

The steering pump 28 is driven by driving power from the engine 21. The hydraulic fluid discharged from the steering pump 28 is supplied to the abovementioned steering cylinder 18 through a steering control valve 43. The work vehicle 1 is equipped with a steering pump pressure detecting unit 34. The steering pump pressure detecting unit 34 detects the discharge pressure (referred to below as "steering pump pressure") of hydraulic fluid from the steering pump 28 and transmits a detection signal indicating the steering pump pressure to the control unit 27.

The steering pump 28 is a variable displacement hydraulic pump. The discharge capacity of the steering pump 28 is changed by changing the tilt angle of a skew plate or an inclined shaft of the steering pump 28. A second capacity control device 44 is connected to the steering pump 28. The second capacity control device 44 is controlled by the control unit 27 and changes the tilt angle of the steering pump 28. As a result, the discharge capacity of the steering pump 28 is controlled by the control unit 27. The work vehicle 1 is equipped with a second tilt angle detecting unit 35. The second tilt angle detecting unit 35 detects the tilt angle of the steering pump 28 and transmits a detection signal indicating the tilt angle to the control unit 27.

The transmission pump 29 is driven by driving power from the engine 21. The transmission pump 29 is a fixed displacement hydraulic pump. Hydraulic fluid discharged from the transmission pump 29 is supplied to clutches CF, CR, CL, and CH of the power transmission device 24 via belowmentioned clutch control valves VF, VR, VL, and VH. The work vehicle 1 is equipped with a transmission pump pressure detecting unit 36. The transmission pump pressure detecting unit 36 detects the discharge pressure (referred to below as "transmission pump pressure") of the hydraulic fluid from the transmission pump 29 and transmits a detection signal indicating the transmission pump pressure to the control unit 27.

The PTO 22 transmits a portion of the driving power from the engine 21 to the power transmission device 24. The power transmission device 24 transmits the driving power from the engine 21 to the travel device 25. The power transmission device 24 changes the speed and outputs the driving power from the engine 21. An explanation of the configuration of the power transmission device 24 is provided in detail below.

The travel device 25 has an axle 45 and the traveling wheels 4 and 5. The axle 45 transmits driving power from the power transmission device 24 to the traveling wheels 4 and 5. As a result, the traveling wheels 4 and 5 rotate. The work vehicle 1 is equipped with an output rotation speed detecting unit 37 and an input rotation speed detecting unit 38. The output rotation speed detecting unit 37 detects the rotation speed (referred to below as "output rotation speed") of an output shaft 63 of the power transmission device 24. The output rotation speed corresponds to the vehicle speed and consequently the output rotation speed detecting unit 37 detects the vehicle speed by detecting the output rotation speed. The input rotation speed detecting unit 38 detects the rotation speed (referred to below as "input rotation speed") of an input shaft 61 of the power transmission device 24. The output rotation speed detecting unit 37 transmits detection signals indicating the output rotation speed to the control unit 27. The input rotation speed detecting unit 38 transmits detection signals indicating the input rotation speed to the control unit 27.

The operating device 26 is operated by an operator. The operating device 26 has an accelerator operating device 51, a work implement operating device 52, a speed change operating device 53, a FR operating device 54, a steering operating device 57, and a brake operating device 58.

The accelerator operating device 51 has an accelerator operating member 51a and an accelerator operation detecting unit 51b. The accelerator operating member 51a is operated in order to set a target rotation speed of the engine 21. The accelerator operation detecting unit 51b detects an operating amount (referred to below as "accelerator operating amount") of the accelerator operating device 51. The accelerator operation detecting unit 51b transmits a detection signal indicating the accelerator operating amount to the control unit 27.

The work implement operating device 52 has a work implement operating member 52a and a work implement operation detecting unit 52b. The work implement operating member 52a is operated in order to actuate the work implement 3. The work implement operation detecting unit 52b detects a position of the work implement operating member 52a. For example, the work implement operation detecting unit 52b detects the position of the work implement operating member 52a by converting to an electrical signal corresponding to the tilt angle of the work implement operating member 52a. The work implement operation detecting unit 52b outputs a detection signal indicating the position of the work implement operating member 52a to the control unit 27.

The speed change operating device 53 has a speed change operating member 53a and a speed change operation detecting unit 53b. The operator is able to select a speed change pattern of the power transmission device 24 by operating the speed change operating member 53a. The speed change operation detecting unit 53b detects a position of the speed change operating member 53a. The speed change operation detecting unit 53b outputs a detection signal indicating the position of the speed change operating member 53a to the control unit 27.

The FR operating device 54 has a FR operating member 54a and a FR operation detecting unit 54b. The operator can switch between forward and reverse travel of the work vehicle 1 by operating the FR operating member 54a. The FR operation detecting unit 54b detects a position of the FR operating member 54a. The FR operation detecting unit 54b outputs a detection signal indicating the position of the FR operating member 54a to the control unit 27.

The steering operating device 57 has a steering operating member 57a. The steering operating device 57 drives the steering control valve 43 by supplying pilot hydraulic pressure based on an operation of the steering operating member 57a to the steering control valve 43. The operator is able to change the travel direction of the work vehicle 1 to the right or left by operating the steering operating member 57a. The steering operating device 57 may drive the steering control valve 43 by converting an operation of the steering operating member 57a to an electrical signal.

The brake operating device 58 has a brake operating member 58a and a brake operation detecting unit 58b. The operator actuates a brake device (not illustrated) to generate a braking force on the work vehicle 1 by operating the brake operating member 58a. The brake operation detecting unit 58b detects a position of the brake operating member 58a. The brake operation detecting unit 58b outputs a detection signal indicating the position of the brake operating member 58a to the control unit 27.

The control unit 27 has a calculation device such as a CPU and a memory such as a RAM or a ROM, and conducts various types of processing for controlling the work vehicle 1. The control unit 27 has a storage unit 56. The storage unit 56 stores various types of programs and data for controlling the work vehicle 1.

The control unit 27 transmits a command signal indicating a command throttle value to the fuel injection device 21C so that the target rotation speed of the engine 21 is obtained in accordance with the accelerator operating amount. The control unit 27 controls the hydraulic pressure supplied to the hydraulic cylinders 13 and 14 by controlling the work implement control valve 41 on the basis of the detection signals from the work implement operation detecting unit 52b. As a result, the hydraulic cylinders 13 and 14 expand or contract to operate the work implement 3.

The control unit 27 further has a clutch control unit 58 and a motor control unit 55 for controlling the power transmission device 24. An explanation of the configuration of the power transmission device 24 is provided in detail below.

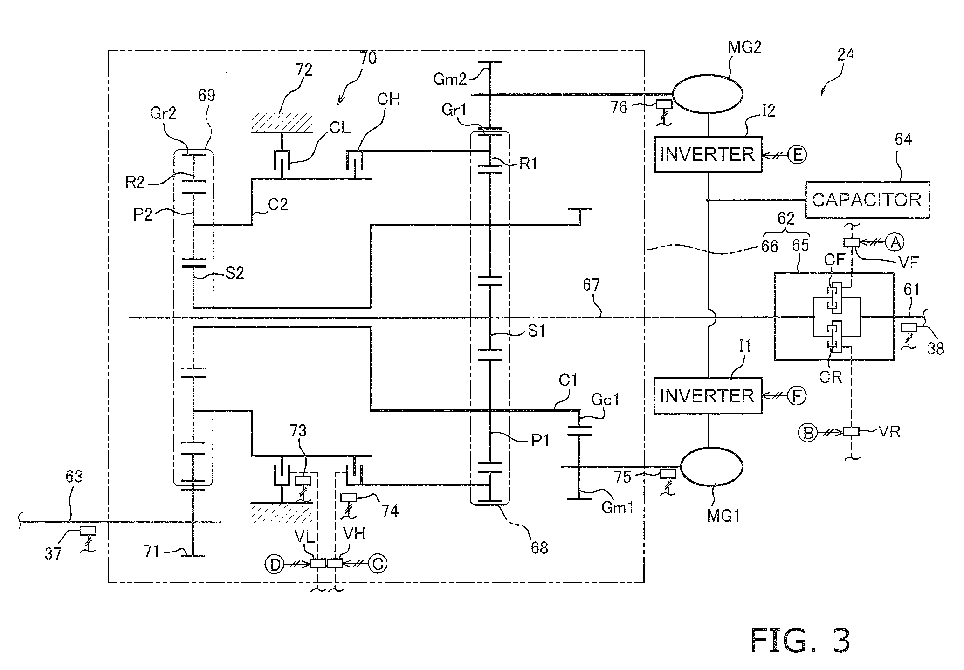

Next, a detailed explanation of the configuration of the power transmission device 24 is provided. FIG. 3 is a schematic view of a configuration of the power transmission device 24. As illustrated in FIG. 3, the power transmission device 24 is provided with the input shaft 61, a gear mechanism 62, the output shaft 63, a first motor MG1, a second motor MG2, and a capacitor 64. The input shaft 61 is connected to the abovementioned PTO 22. The rotation from the engine 21 is inputted to the input shaft 61 via the PTO 22. The gear mechanism 62 transmits the rotation of the input shaft 61 to the output shaft 63. The output shaft 63 is connected to the abovementioned travel device 25, and transmits the rotation from the gear mechanism 62 to the abovementioned travel device 25.

The gear mechanism 62 is a mechanism for transmitting driving power from the engine 21. The gear mechanism 62 is configured so that the speed ratio of the output shaft 63 with respect to the input shaft 61 is changed in response to changes in the rotation speeds of the motors MG1 and MG2. The gear mechanism 62 has a FR switch mechanism 65 and a speed change mechanism 66.

The FR switch mechanism 65 has a forward movement clutch CF, a reverse movement clutch CR, and various types of gears (not illustrated). The forward movement clutch CF and the reverse movement clutch CR are hydraulic clutches and hydraulic fluid is supplied from the transmission pump 29 to the clutches CF and CR. The hydraulic fluid for the forward movement clutch CF is controlled by a F-clutch control valve VF. The hydraulic fluid for the reverse movement clutch CR is controlled by a R-clutch control valve VR. The clutch control valves CF and CR are controlled by command signals from the clutch control unit 58. The direction of the rotation outputted from the FR switch mechanism 65 is switched due to the switching between engaged/disengaged states of the forward movement clutch CF and engaged/disengaged states of the reverse movement clutch CR.

The speed change mechanism 66 has a transmission shaft 67, a first planetary gear mechanism 68, a second planetary gear mechanism 69, a Hi/Lo switch mechanism 70, and an output gear 71. The transmission shaft 67 is coupled to the FR switch mechanism 65. The first planetary gear mechanism 68 and the second planetary gear mechanism 69 are disposed on the same axis as the transmission shaft 67.

The first planetary gear mechanism 68 has a first sun gear S1, a plurality of first planet gears P1, a first carrier C1 that supports the plurality of first planet gears P1, and a first ring gear R1. The first sun gear S1 is coupled to the transmission shaft 67. The plurality of first planet gears P1 mesh with the first sun gear S1 and are supported in a rotatable manner by the first carrier C1. A first carrier gear Gc1 is provided on an outer peripheral part of the first carrier C1. The first ring gear R1 meshes with the plurality of first planet gears P1 and is able to rotate. A first ring outer periphery gear Gr1 is provided on the outer periphery of the first ring gear R1.

The second planetary gear mechanism 69 has a second sun gear S2, a plurality of second planet gears P2, a second carrier C2 that supports the plurality of second planet gears P2, and a second ring gear R2. The second sun gear S2 is coupled to the first carrier C1. The plurality of second planet gears P2 mesh with the second sun gear S2 and are supported in a rotatable manner by the second carrier C2. The second ring gear R2 meshes with the plurality of second planet gears P2 and is able to rotate. A second ring outer periphery gear Gr2 is provided on the outer periphery of the second ring gear R2. The second ring outer periphery gear Gr2 meshes with the output gear 71, and the rotation of the second ring gear R2 is outputted to the output shaft 63 via the output gear 71.

The Hi/Lo switch mechanism 70 is a mechanism for selectively switching the driving power transmission path of the power transmission device 24 between a first mode and a second mode. In the present embodiment, the first mode is a high-speed mode (Hi mode) in which the vehicle speed is high, and the second mode is a low-speed mode (Lo mode) in which the vehicle speed is low. The Hi/Lo switch mechanism 70 has an H-clutch CH that is engaged during the Hi mode and a L-clutch CL that is engaged during the Lo mode. The H-clutch CH engages or disengages the first ring gear R1 and the second carrier C2. The L-clutch CL engages or disengages the second carrier C2 and a fixed end 72 to prohibit or allow the rotation of the second carrier C2.

The clutches CH and CL are hydraulic clutches, and hydraulic fluid from the transmission pump 29 is supplied to each of the clutches CH and CL. The hydraulic fluid for the H-clutch CH is controlled by an H-clutch control valve VH. The hydraulic fluid for the L-clutch CL is controlled by an L-clutch control valve VL. The clutch control valves VH and VL are controlled by command signals from the clutch control unit 58.

The work vehicle 1 has a first oil temperature detecting unit 73 and a second oil temperature detecting unit 74. The first oil temperature detecting unit 73 detects the temperature of the hydraulic fluid supplied to the L-clutch CL (referred to below as "L-clutch oil temperature"). The second oil temperature detecting unit 74 detects the temperature of the hydraulic fluid supplied to the H-clutch CH (referred to below as "H-clutch oil temperature"). The first oil temperature detecting unit 73 transmits a detection signal indicating the L-clutch oil temperature to the control unit 27. The second oil temperature detecting unit 74 transmits a detection signal indicating the H-clutch oil temperature to the control unit 27.

The first motor MG1 and the second motor MG2 function as drive motors that generate driving power using electrical energy. The first motor MG1 and the second motor MG2 also function as generators that use inputted driving power to generate electrical energy. The first motor MG1 functions as a generator when a command signal from the motor control unit 55 is applied to the first motor MG1 so as to activate torque in the reverse direction of the rotating direction of the first motor MG1. A first motor gear Gm1 is fixed to the output shaft of the first motor MG1 and the first motor gear Gm1 meshes with the first carrier gear Gc1.

A first inverter I1 is connected to the first motor MG1 and a command signal for controlling the motor torque of the first motor MG1 is issued to the first inverter I1 from the motor control unit 55. The rotation speed of the first motor MG1 is detected by a first motor rotation speed detecting unit 75. The first motor rotation speed detecting unit 75 transmits detection signals indicating the rotation speed of the first motor MG1 to the control unit 27.

The second motor MG2 is configured in the same way as the first motor MG1. A second motor gear Gm2 is fixed to the output shaft of the second motor MG2 and the second motor gear Gm2 meshes with the first ring outer periphery gear Gr1. A second inverter I2 is connected to the second motor MG2 and a command signal for controlling the motor torque of the second motor MG2 is issued to the second inverter I2 from the motor control unit 55. The rotation speed of the second motor MG2 is detected by a second motor rotation speed detecting unit 76. The second motor rotation speed detecting unit 76 transmits detection signals indicating the rotation speed of the second motor MG2 to the control unit 27.

The capacitor 64 functions as an energy reservoir unit for storing energy regenerated by the motors MG1 and MG2. That is, the capacitor 64 stores the electrical power generated by the motors MG1 and MG2 when the motors MG1 and MG2 function as generators. A battery which is another electricity storage means may be used in place of the capacitor.

The motor control unit 55 receives detection signals from the various detecting units and issues command signals for indicating the command torques for the motors MG1 and MG2 to the inverters I1 and I2. The clutch control unit 58 also issues command signals for controlling the clutch hydraulic pressure of the clutches CF, CR, CH, and CL to the clutch control valves VF, VR, VH, and VL. As a result, the speed change ratio and the output torque of the power transmission device 24 are controlled. The following is an explanation of the operations of the power transmission device 24.

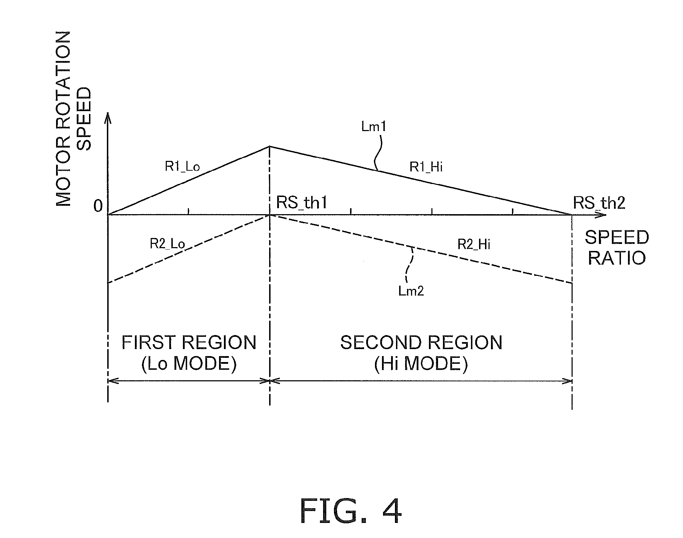

An outline of operations of the power transmission device 24 when the vehicle speed increases from zero in the forward travel side while the rotation speed of the engine 21 remains fixed, will be explained with reference to FIG. 4. FIG. 4 depicts the rotation speeds of the motors MG1 and MG2 in relation to the speed ratio of the power transmission device 24. The speed ratio is the ratio of the rotation speed of the output shaft 63 with respect to the rotation speed of the input shaft 61. When the rotation speed of the engine 21 is fixed, the vehicle speed changes in response to the speed ratio of the power transmission device 24. Therefore, the change in the vehicle speed in FIG. 4 matches the variation of the speed ratio of the power transmission device 24. That is, FIG. 4 illustrates the relationship between the vehicle speed and the rotation speeds of the motors MG1 and MG2.

The solid line Lm1 in FIG. 4 represents the rotation speed of the first motor MG1, and the dashed line Lm2 represents the rotation speed of the second motor MG2.

The L-clutch CL is engaged and the H-clutch CH is disengaged in a first region (Lo mode) from when the speed ratio is zero until the speed ratio reaches a first threshold Rs_th1. The first threshold Rs_th1 is a mode-switching threshold for determining switching of the modes. Because the H-clutch CH is disengaged in the first region, the second carrier C2 and the first ring gear R1 are disengaged. Because the L-clutch CL is engaged, the second carrier C2 is fixed.

The driving power from the engine 21 in the first region is inputted to the first sun gear S1 via the transmission shaft 67, and the driving power is outputted from the first carrier C1 to the second sun gear S2. Conversely, the driving power inputted to the first sun gear S1 is transmitted from the first planet gears P1 to the first ring gear R1 and outputted through the first ring outer periphery gear Gr1 and the second motor gear Gm2 to the second motor MG2. The second motor MG2 functions as a generator in the first region, and a portion of the electrical power generated by the second motor MG2 is stored in the capacitor 64.

The first motor MG1 in the first region functions as an electric motor for driving with electrical power supplied from the second motor MG2 and the capacitor 64. The driving power of the first motor MG1 is outputted to the second sun gear S2 along a path from the first motor gear Gm1 to the first carrier gear Gc1 to the first carrier C1. The driving power outputted to the second sun gear S2 as described above is transmitted to the output shaft 63 along a path from the second planet gears P2 to the second ring gear R2 to the second ring outer periphery gear Gr2 to the output gear 71.

The rotation speed of the second motor MG2 becomes "0" at the first threshold Rs_th1. That is, the second motor MG2 is stopped.

The H-clutch CH is engaged and the L-clutch CL is disengaged in a second region (Hi mode) in which the speed ratio exceeds the first threshold Rs_th1. Because the H-clutch CH is engaged in the second region, the second carrier C2 and the first ring gear R1 are connected. Because the L-clutch CL is disengaged, the second carrier C2 is released. Therefore, the rotation speed of the first ring gear R1 and the second carrier C2 match.

The driving power from the engine 21 in the second region is inputted to the first sun gear S1 and the driving power is outputted from the first carrier C1 to the second sun gear S2. The driving power inputted to the first sun gear S1 is outputted from the first carrier C1 through the first carrier gear Gc1 and the first motor gear Gm1 to the first motor MG1. The first motor MG1 functions as a generator in the second region, and thus a portion of the electrical power generated by the first motor MG1 is stored in the capacitor 64.

The second motor MG2 functions as an electric motor for driving with electrical power supplied from the first motor MG1 and the capacitor 64. The driving power of the second motor MG2 is outputted to the second carrier C2 along a path from the second motor gear Gm2 to the first ring outer periphery gear Gr1 to the first ring gear R1 to the H-clutch CH. The driving power outputted to the second sun gear S2 as described above is outputted through the second planet gears P2 to the second ring gear R2, and the driving power outputted to the second carrier C2 is outputted through the second planet gears P2 to the second ring gear R2. The driving power combined by the second ring gear R2 in this way is transmitted through the second ring outer periphery gear Gr2 and the output gear 71 to the output shaft 63.

The rotation speed of the first motor MG1 becomes "0" when the speed ratio is at a second threshold Rs_th2. That is, the rotation of the first motor MG1 is stopped and the second motor MG2 is idle. That is, the second motor MG2 is in a state of not generating torque and does not carry out electrical generation or electrical driving. While forward movement driving has been discussed above, the operations of reverse movement driving are the same.

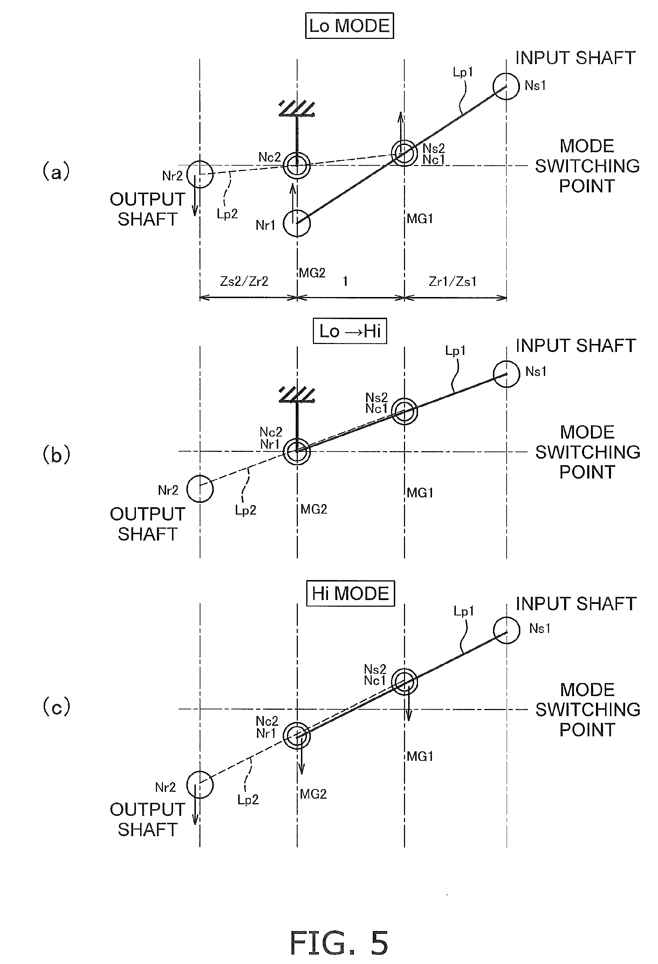

Next, an outline of the operations of the power transmission device 24 will be explained using collinear figures. The rotation speed of the first sun gear S1 in the first planetary gear mechanism 68 is Ns1 and the number of teeth is Zs1. The rotation speed of the first carrier C1 is Nc1. The rotation speed of the first ring gear R1 is Nr1 and the number of teeth is Zr1. The rotation speed of the second sun gear S2 in the second planetary gear mechanism 69 is Ns2 and the number of teeth is Zs2. The rotation speed of the second carrier C2 is Nc2. The rotation speed of the second ring gear R2 is Nr2 and the number of teeth is Zr2. FIG. 5 is an illustration with collinear figures of the relationships between the number of teeth and the rotation speeds of each of the elements of the first planetary gear mechanism 68 and the second planetary gear mechanism 69.

The relationship between the rotation speeds of each of the elements of the planetary gear mechanisms is depicted by a straight line in the collinear figures. Therefore, Ns1, Nc1, and Nr1 are aligned in a straight line as illustrated in FIG. 5. Ns2, Nc2, and Nr2 are also aligned in a straight line. The solid line Lp1 in FIG. 5 depicts the relationship between the rotation speeds of each of the elements of the first planetary gear mechanism 68. The dashed line Lp2 depicts the relationship between the rotation speeds of each of the elements of the second planetary gear mechanism 69.

FIG. 5(a) depicts the rotation speed of each of the elements in the Lo mode. As described above, Ns1 is fixed when the rotation speed of the engine 21 is fixed to allow for ease of explanation. Nc1 increases due to an increase in the rotation speed of the first motor MG1 in the Lo mode. When Nc1 increases, Nr1 decreases. As a result, the rotation speed of the second motor MG2 decreases. The first carrier C1 is connected to the second sun gear S2 in the power transmission device 24. Therefore, Nc1 and Ns2 match. Thus, Ns2 increases in accompaniment to an increase in Nc1. The second carrier C2 is fixed to the fixed end 72 in the Lo mode. As a result, Nc2 is held at zero. Therefore, Nr2 increases due to the increase in Ns2. Consequently, the speed ratio of the power transmission device 24 increases. In this way, the speed ratio of the power transmission device 24 increases in accompaniment to the increase in the rotation speed of the first motor MG1 in the Lo mode.

Nr1 becomes zero when the speed ratio of the power transmission device 24 reaches the abovementioned first threshold Rs_th1. Therefore, the rotation speed of the second motor MG2 becomes zero. The Lo mode is switched to the Hi mode at this time. That is, the L-clutch CL is switched from the engaged state to the disengaged state. As a result, the second carrier C2 is released from the fixed end 72 and is able to rotate. The H-clutch CH is switched from the disengaged state to the engaged state. As a result, the first ring gear R1 and the second carrier C2 are connected.

FIG. 5(c) depicts the rotation speed of each of the elements in the Hi mode. Nr1 and Nc2 match in the Hi mode because the first ring gear R1 and the second carrier C2 are connected. As described above, Nc1 and Ns2 match because the first carrier C1 is connected to the second sun gear S2. Therefore, Nc2 increases when Nr1 increases due to an increase in the rotation speed of the second motor MG2. Thus, Nr2 increases due to the increase in Nc2. As a result, the speed ratio of the power transmission device 24 increases. In this way, the speed ratio of the power transmission device 24 increases in accompaniment to the increase in the rotation speed of the second motor MG2. Ns2 and Nc1 decrease due to the increase of Nr1 and Nc2. As a result, the rotation speed of the first motor MG1 decreases. Ns2 and Nc1 become zero when the speed ratio of the power transmission device 24 reaches the abovementioned second threshold Rs_th2. As a result, the rotation speed of the first motor MG1 becomes zero. The operations discussed above are operations when switching from the Lo mode to the Hi mode, and the operations when switching from the Hi mode to the Lo mode are in the reverse order of the above operations.

When the rotation speed of the engine 21 is fixed, that is when the rotation speed of the input shaft 61 is fixed as described above, the rotation speed of the first motor MG1 increases in correspondence to the increase in the speed ratio in the Lo mode. The rotation speed of the first motor MG1 decreases in correspondence to the increase in the speed ratio in the Hi mode. Therefore as illustrated in FIG. 4, the speed ratio changes with a rate of change R1_Lo with regard to the rotation speed of the first motor MG1 in the Lo mode. However in the Hi mode, the speed ratio changes with a rate of change R1_Hi that is different from the rate of change R1_Lo in the Lo mode with regard to the rotation speed of the first motor MG1. Specifically, the plus and minus of the rate of change R1_Hi in the Hi mode and the rate of change R1_Lo in the Lo mode are different. When the speed ratio is at the first threshold Rs_th1, the rotation speed of the first motor MG1 in the Lo mode and the rotation speed of the first motor MG1 in the Hi mode are equal. In other words, the rotation speed ratio of the first motor MG1 with respect to the input shaft 61 in the Lo mode is equal to the rotation speed ratio of the first motor MG1 with respect to the input shaft 61 in the Hi mode when the speed ratio is at the first threshold Rs_th1.

When the rotation speed of the engine 21 is fixed, that is when the rotation speed of the input shaft 61 is fixed, the rotation speed of the second motor MG2 decreases in correspondence to the increase in the speed ratio in the Lo mode. The rotation speed of the second motor MG2 decreases in correspondence to the increase in the speed ratio in the Hi mode. Therefore as illustrated in FIG. 4, the speed ratio changes with a rate of change R2_Lo with regard to the rotation speed of the second motor MG2 in the Lo mode. However in the Hi mode, the speed ratio changes with a rate of change R2_Hi that is different from the rate of change R2_Lo in the Lo mode with regard to the rotation speed of the second motor MG2. Specifically, the plus and minus of the rate of change R2_Hi in the Hi mode and the rate of change R2_Lo in the Lo mode are different. When the speed ratio is at the first threshold Rs_th1, the rotation speed of the second motor MG2 in the Lo mode and the rotation speed of the second motor MG2 in the Hi mode are equal. In other words, the rotation speed ratio of the second motor MG2 with respect to the input shaft 61 in the Lo mode is equal to the rotation speed ratio of the second motor MG2 with respect to the input shaft 61 in the Hi mode when the speed ratio is at the first threshold Rs_th1.

As described above, the clutch control unit 58 switches the modes between the Lo mode and the Hi mode. The clutch control unit 58 switches the H-clutch CH and the L-clutch CL by transmitting clutch command signals to the H-clutch control valve VH and the L-clutch control valve VL. The following is a detailed explanation of switching control in the Hi mode and the Lo mode.

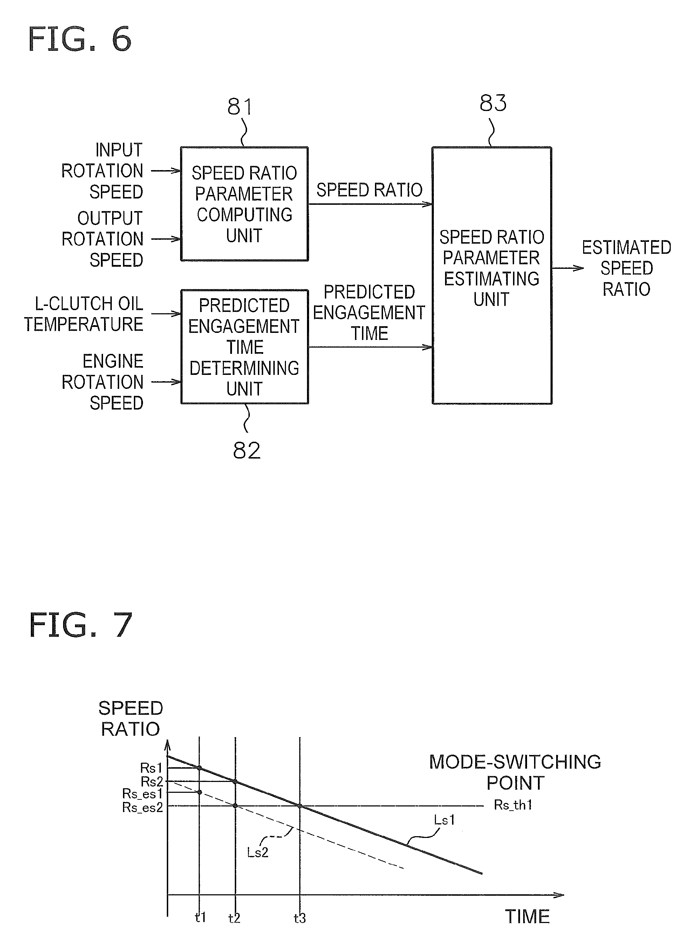

FIG. 6 is a control block diagram depicting processing executed by the control unit 27 according to a first embodiment. The control unit 27 executes speed ratio predicting control when the Hi mode is switched to the Lo mode. Specifically, the control unit 27 has a speed ratio parameter computing unit 81, a predicted engagement time determining unit 82, and a speed ratio parameter estimating unit 83.

The speed ratio parameter computing unit 81 calculates the speed ratio of the power transmission device 24 from the input rotation speed and the output rotation speed of the power transmission device 24. The input rotation speed is detected by the input rotation speed detecting unit 38. The output rotation speed is detected by the output rotation speed detecting unit 37.

The predicted engagement time determining unit 82 determines the predicted engagement time. The predicted engagement time is the predicted value for the time required from the beginning of the L-clutch CL engagement until engagement is complete. The predicted engagement time determining unit 82 determines the predicted engagement time on the basis of an L-clutch oil temperature, the engine rotation speed, and predicted engagement time information. The L-clutch oil temperature is detected by the first oil temperature detecting unit 73. The engine rotation speed is detected by the engine rotation speed detecting units. The predicted engagement time information is data for stipulating the relationship between the L-clutch oil temperature, the engine rotation speed, and the predicted engagement time and is stored in the storage unit 56 in the format of a map or a table. The hydraulic fluid generally has a lower viscosity when the oil temperature is high. As a result, the clutch can be switched more quickly. Therefore, the predicted engagement time information may be stipulated so that the predicted engagement time is shorter when the oil temperature is high. The clutch oil temperature is set as an L-clutch oil temperature and an H-clutch oil temperature, but the clutch oil temperature may also be substituted by the temperature near the pump that supplies the hydraulic fluid to the supplied clutch.

The speed ratio parameter estimating unit 83 determines an estimated speed ratio which is an estimated value of the speed ratio after the elapse of the predicted engagement time from the current point in time. FIG. 7 is a graph illustrating a method for determining the estimated speed ratio by the speed ratio parameter estimating unit 83, and depicts changes in the speed ratio when the speed of the work vehicle 1 is reduced and the modes are switched from the Hi mode to the Lo mode. The speed ratio parameter estimating unit 83 records the speed ratios calculated by the speed ratio parameter computing unit 81 at prescribed times and derives a rate of change of the speed ratios from the recorded speed ratios. The solid line Ls1 in FIG. 7 depicts the rate of change of the speed ratios derived from the recorded speed ratio. The speed ratio parameter estimating unit 83 then determines the estimated speed ratio by calculating the speed ratio after the predicted engagement time has elapsed from the rate of change of the speed ratios. The dashed line Ls2 in FIG. 7 depicts the estimated speed ratio.

The clutch control unit 58 outputs a clutch command signal for causing the L-clutch CL to be engaged when the estimated speed ratio reaches the first threshold Rs_th1. For example, if the actual speed ratio at a point in time t1 in FIG. 7 is Rs1, the speed ratio parameter estimating unit 83 determines that the estimated speed ratio is Rs_es1. Because Rs_es1 is greater than the first threshold Rs_th1, the clutch control unit 58 maintains the Hi mode and does not switch the modes at the point in time t1.

If the speed ratio decreases and the actual speed ratio at a point in time t2 is Rs2, the speed ratio parameter estimating unit 83 determines that the estimated speed ratio is Rs_es2. Rs_es2 matches the first threshold Rs_th1. As a result, the clutch control unit 58 outputs a clutch command signal for engaging the L-clutch CL at the point in time t2. The engagement of the L-clutch CL is completed at a point in time t3 when the predicted engagement time from the point in time t2 has elapsed. The point in time t3 is when the actual speed ratio approximately matches the first threshold Rs_th1. As a result, when the speed ratio reaches the first threshold Rs_th1, the engagement of the L-clutch CL can be promptly completed.

As described above, the clutch command signal is outputted before the speed ratio reaches the first threshold Rs_th1 in consideration of the predicted engagement time during the speed ratio prediction control. As a result, the L-clutch CL can be engaged at the point in time that the speed ratio approximately reaches the first threshold Rs_th1. Consequently, the modes can be switched quickly from the Hi mode to the Lo mode when the speed ratio reaches the first threshold Rs_th1. Because switching from the Hi mode to the Lo mode has been explained as an example, the present embodiment refers to the oil temperature of the L-clutch which influences the engagement time. The same results can be obtained by referring to the oil temperature of the H-clutch when switching from the Lo mode to the Hi mode.

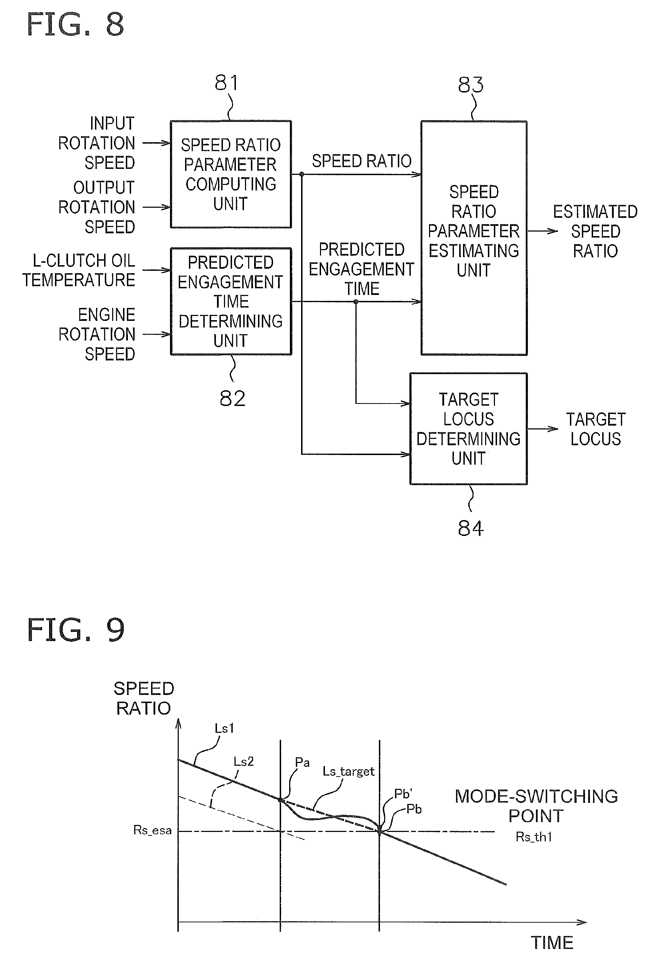

FIG. 8 is a control block diagram depicting processing executed by the control unit 27 according to a second embodiment. The control unit 27 in the second embodiment executes an external force correction control when the Hi mode is switched to the Lo mode. Specifically, the control unit 27 further has a target locus determining unit 84 as illustrated in FIG. 8. The target locus determining unit 84 determines a target locus.

FIG. 9 illustrates an example of a target locus Ls_target. The target locus Ls_target is a target locus of changes in the speed ratio from a point in time Pa of a clutch command signal output until a point in time Pb that the predicted engagement time has elapsed. The target locus Ls_target is set so that the speed ratio at the point in time Pa of the clutch command signal output is joined smoothly with an estimated speed ratio Rs_esa at the point in time Pb that the predicted engagement time has elapsed. The target locus Ls_target in the present embodiment is a linear locus that joins the speed ratio at the point in time Pa of the clutch command signal output with the estimated speed ratio Rs_esa at the point in time Pb that the predicted engagement time has elapsed.

The motor control unit 55 controls the second motor MG2 so that the speed ratio changes in accordance with the target locus Ls_target during the period from the point in time of the clutch command signal output until the point in time that the predicted engagement time has elapsed. Specifically, the motor control unit 55 switches the control of the second motor MG2 from the abovementioned torque control to a rotation speed control during the period from the point in time of the clutch command signal output until the point in time that the predicted engagement time has elapsed. The motor control unit 55 determines a target speed ratio Ltg using the following numerical equation 1 and carries out feedback control of the rotation speed of the second motor MG2 so that the speed ratio becomes the target speed ratio Ltg.

(Equation 1)

$$Ltg = Li - ( Li - Lo ) * dt / tf$$

Ltg represents the target speed ratio when the elapsed time from the point in time Pa of the clutch command signal output is dt. Li represents the speed ratio at the point in time Pa of the clutch command signal output. Lo represents the target speed ratio at the point in time Pb when the predicted engagement time has elapsed. The target speed ratio at the point in time Pb when the predicted engagement time has elapsed is derived from the target locus Ls_target. tf represents the predicted engagement time. The motor control unit 55 determines the rotation speed of the second motor MG2 corresponding to the target speed ratio Ltg as the target rotation speed Ntarget. The motor control unit 55 then transmits a command signal indicating the target rotation speed Ntarget to the second inverter I2. The target rotation speed for the second motor MG2 may also be zero when the predicted engagement time is less than a predetermined threshold. This is because the speed ratio matches the speed ratio of the mode-switching point when the rotation speed for the second motor MG2 is zero.

As described above, the speed ratio is corrected to follow the target locus Ls_target by controlling the rotation speed of the second motor MG2 even if an external force on the work vehicle changes suddenly after the output of the clutch command signal during the external force correction control.

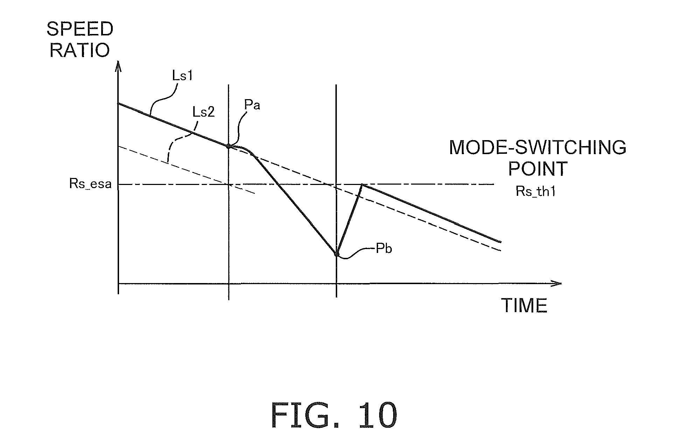

For example, an external force on the work vehicle 1 may change greatly when, for example, the brake is applied or when excavating is started after the output of the clutch command signal. FIG. 10 illustrates changes in the speed ratio when an external force is changed greatly at the point in time Pa of the clutch command signal output. As illustrated in FIG. 10, the speed ratio at the point in time Pb when the predicted engagement time has elapsed differs greatly from the estimated speed ratio Rs_esa estimated by the speed ratio parameter estimating unit 83 when the speed of the work vehicle 1 is reduced suddenly due to an external force. In this case, it is difficult to switch the L-clutch CL when the speed ratio reaches the first threshold Rs_th1.

In contrast, when the external force correction control is carried out as in the present embodiment, any impact on the speed ratio due to an external force is mitigated by controlling the second motor MG2 and correcting the speed ratio. As a result, a change in the speed ratio that varies greatly from the estimation by the speed ratio parameter estimating unit 83 can be suppressed. Therefore, as illustrated in FIG. 9, the speed ratio at a point in time Pb' when the predicted engagement time has elapsed approximately matches the estimated speed ratio Rs_esa estimated by the speed ratio parameter estimating unit 83. As a result, the switching of the clutch can be carried out at a good timing when the speed ratio reaches the first threshold Rs_th1 even if an external force on the work vehicle 1 changes suddenly.

Although an embodiment of the present invention has been described, the present invention is not limited to the above embodiment and various modifications may be made within the scope of the invention.

The present invention is not limited to the abovementioned wheel loader and may be applied to another type of work vehicle such as a bulldozer, a tractor, a forklift, or a motor grader.

The present invention may be applicable to another type of speed change device such as a HMT without being limited to the EMT. In this case, the first motor MG1 functions as a hydraulic motor and a hydraulic pump. The second motor MG2 functions as a hydraulic motor and a hydraulic pump. The first motor MG1 and the second motor MG2 are variable capacitor pump/motors, and the capacities are controlled by the control unit 27 controlling the tilt angle of the skew plate or the inclined shaft. The capacities of the first motor MG1 and the second motor MG2 are controlled so that the command torques Tm1_ref and Tm2_ref calculated in the same way as in the above embodiments are outputted.

While the speed ratio of the output shaft 63 with respect to the input shaft 61 is used as a speed ratio parameter in the above embodiment, another parameter corresponding to the speed ratio may be used. For example, a rotation speed ratio of the first motor MG1 or a rotation speed ratio of the second motor MG2 with respect to the input shaft 61 may be used as the speed ratio parameter. Alternatively, the rotation speed of the first motor MG1 or the rotation speed of the second motor MG2 may be used as the speed ratio parameter.

While the first mode is the Hi mode and the second mode is the Lo mode in the above embodiment, the first mode may be the Lo mode and the second mode may be the Hi mode. That is, while the speed ratio prediction control, the external force correction control, and the clutch disengagement control are carried out when switching from the Hi mode to the Lo mode in the above embodiment, the controls may also be carried out when switching from the Lo mode to the Hi mode. Alternatively, the speed ratio prediction control, the external force correction control, and the clutch disengagement control may be carried out both when switching from the Hi mode to the Lo mode and when switching from the Lo mode to the Hi mode.

The engagement time parameters are not limited to the oil temperature and the engine rotation speed. For example, the rotation speed of the transmission pump 29 may be used as an engagement time parameter in place of the engine rotation speed. Alternatively, the discharge flow rate of the transmission pump 29 may be used as an engagement time parameter in place of the engine rotation speed. Alternatively, the clutch disengagement time may be used as the engagement time parameter. The clutch disengagement time is the time elapsed after the disengagement of the clutch has started. When the disengagement of the clutch has started, hydraulic fluid flows out from the inside of the clutch. If the clutch engagement command is issued again at this time before the clutch has become empty, the clutch can be filled with hydraulic fluid in a shorter time than normal and the engagement time can be reduced. Therefore, by using the clutch disengagement time as an engagement time parameter, the clutch engagement time can be estimated with greater accuracy. The clutch disengagement time is preferably used as an engagement time parameter along with the oil temperature.

While the input rotation speed and the output rotation speed are used in the computation of the speed ratio of the power transmission device 24, another parameter may be used. For example, the speed ratio parameter computing unit 81 may calculate the speed ratio of the power transmission device 24 from the rotation speeds of the L-clutch CL and the H-clutch CH. Alternatively, the speed ratio parameter computing unit 81 may calculate the speed ratio of the power transmission device 24 from the rotation speed of the first motor MG1 and the rotation speed of the second motor MG2.

The embodiments discussed in the first embodiment and the second embodiment may be used independently or may be used in combination.

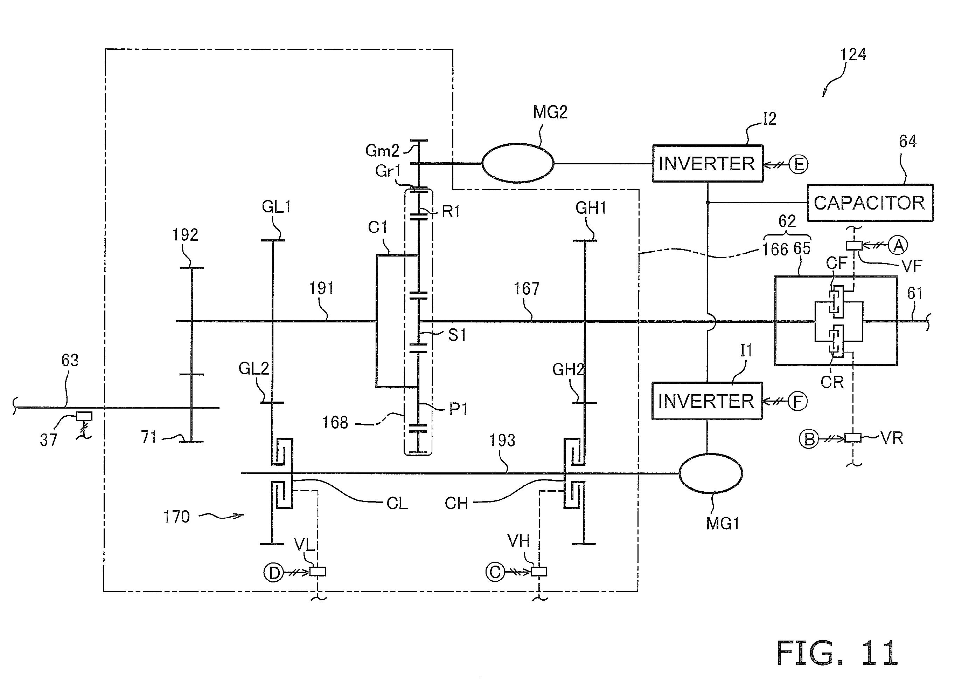

The abovementioned power transmission device 24 has the first planetary gear mechanism 68 and the second planetary gear mechanism 69. However, the number of the planetary gear mechanisms provided in the power transmission device is not limited to two. The power transmission device may only have one planetary gear mechanism. Alternatively, the power transmission device may have three or more planetary gear mechanisms. FIG. 11 is a schematic view of a configuration of a power transmission device 124 provided in a work vehicle according to another embodiment. Other configurations of the work vehicle according to the other embodiment are the same as those of the work vehicle 1 according to the above embodiment and thus explanations thereof are omitted. The same reference numerals are provided in FIG. 11 for the configurations which are the same as the power transmission device 24 according to the above embodiment.

As illustrated in FIG. 11, the power transmission device 124 has a speed change mechanism 166. The speed change mechanism 166 has a planetary gear mechanism 168, a first transmission shaft 167, a second transmission shaft 191, and a second transmission shaft gear 192. The first transmission shaft 167 is coupled to the FR switch mechanism 65. The planetary gear mechanism 168 and the second transmission shaft gear 192 are disposed on the same shaft as the first transmission shaft 167 and the second transmission shaft 191.

The planetary gear mechanism 168 has the sun gear S1, the plurality of planet gears P1, the carrier C1 that supports the plurality of planet gears P1, and the ring gear R1. The sun gear S1 is coupled to the first transmission shaft 167. The plurality of planet gears P1 mesh with the sun gear S1 and are supported in a rotatable manner by the carrier C1. The carrier C1 is fixed to the second transmission shaft 191. The ring gear R1 meshes with the plurality of planet gears P1 and is able to rotate. A ring outer periphery gear Gr1 is provided on the outer periphery of the ring gear R1. The second motor gear Gm2 is fixed to the output shaft 63 of the second motor MG2 and the second motor gear Gm2 meshes with the ring outer periphery gear Gr1.

The second transmission shaft gear 192 is coupled to the second transmission shaft 191. The second transmission shaft gear 192 meshes with the output gear 71, and the rotation of the second transmission shaft gear 192 is outputted to the output shaft 63 via the output gear 71.

The speed change mechanism 166 has a first high-speed gear (referred to below as "first H-gear GH1"), a second high-speed gear (referred to below as "second H-gear GH2"), a first low-speed gear (referred to below as "first L-gear GL1"), a second low-speed gear (referred to below as "second L-gear GL2"), a third transmission shaft 193, and a Hi/Lo switching mechanism 170.

The first H-gear GH1 and the first L-gear GL1 are disposed on the same shaft as the first transmission shaft 167 and the second transmission shaft 191. The first H-gear GH1 is coupled to the first transmission shaft 167. The first L-gear GL1 is coupled to the second transmission shaft 191. The second H-gear GH2 meshes with the first H-gear GH1. The second L-gear GL2 meshes with the first L-gear GL1. The second H-gear GH2 and the second L-gear GL2 are disposed on the same shaft as the third transmission shaft 193, and are disposed so as to be able to rotate in relation to the third transmission shaft 193. The third transmission shaft 193 is coupled to the output shaft of the first motor MG1.

The Hi/Lo switching mechanism 170 is a mechanism for switching the driving power transmission path of the power transmission device 24 between a high-speed mode (Hi mode) in which the vehicle speed is high and a low-speed mode (Lo mode) in which the vehicle speed is low. The Hi/Lo switch mechanism 70 has an H-clutch CH that is engaged during the Hi mode and an L-clutch CL that is engaged during the Lo mode. The H-clutch CH connects and disconnects the second H-gear GH2 and the third transmission shaft 193. The L-clutch CL connects and disconnects the second L-gear GL2 and the third transmission shaft 193.

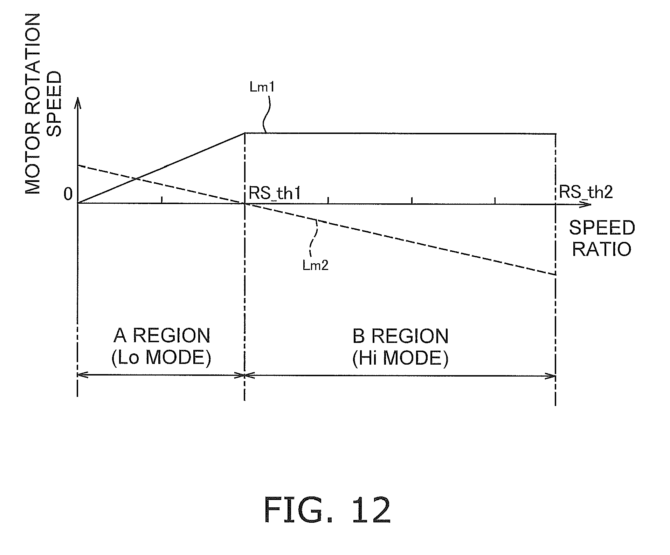

The following is an explanation of the operations of the power transmission device 124. FIG. 12 depicts the rotation speeds of the motors MG1 and MG2 in relation to the speed ratio of the power transmission device 124. The solid line in FIG. 12 represents the rotation speed of the first motor MG1, and the dashed line represents the rotation speed of the second motor MG2. The L-clutch CL is engaged and the H-clutch CH is disengaged in an A region (Lo mode) from when the vehicle speed is zero until the vehicle speed reaches RS_th1. Because the H-clutch CH is disengaged in the A region, the second H-gear GH2 and the third transmission shaft 193 are disconnected. Because the L-clutch CL is engaged, the second L-gear GL2 and the third transmission shaft 193 are connected.

The driving power from the engine 21 in the A region is inputted to the sun gear S1 via the first transmission shaft 167, and the driving power is outputted from the carrier C1 to the second transmission shaft 191. Conversely, the driving power inputted to the sun gear S1 is transmitted from the planet gear P1 to the ring gear R1 and outputted through the ring outer periphery gear Gr1 and the second motor gear Gm2 to the second motor MG2. The second motor MG2 functions as a generator in the A region, and a portion of the electrical power generated by the second motor MG2 is stored in the capacitor 64.

The first motor MG1 functions as an electric motor in the A region. The driving power of the first motor MG1 is outputted to the second transmission shaft 191 along a path from the third transmission shaft 193 to the second L-gear GL2 to the first L-gear GL1. The driving power combined by the second transmission shaft 191 in this way is transmitted through the second transmission shaft gear 192 and the output gear 71 to the output shaft 63.

The H-clutch CH is engaged and the L-clutch CL is disengaged in a B region (Hi mode) in which the vehicle speed exceeds RS_th1. Because the H-clutch CH is engaged in the B region, the second H-gear GH2 and the third transmission shaft 193 are connected. Because the L-clutch CL is disengaged, the second L-gear GL2 and the third transmission shaft 193 are disengaged.

The driving power from the engine 21 in the B region is inputted to the sun gear S1 and the driving power is outputted from the carrier C1 to the second transmission shaft 191. The driving power from the engine 21 is outputted from the first H-gear GH1 through the second H-gear GH2 and the third transmission shaft 193 to the first motor MG1. The first motor MG1 functions as a generator in the B region, and thus a portion of the electrical power generated by the first motor MG1 is stored in the capacitor 64.

The driving power of the second motor MG2 is outputted to the second transmission shaft 191 along a path from the second motor gear Gm2 to the ring outer periphery gear Gr1 to the ring gear R1 to the carrier C1. The driving power combined by the second transmission shaft 191 in this way is transmitted through the second transmission shaft gear 192 and the output gear 71 to the output shaft 63.

The control of the power transmission device 124 in the work vehicle according to the another embodiment is the same as the control of the power transmission device 24 in the above embodiments.

**Industrial Applicability**

According to the present invention, a work vehicle that is able to reduce the feeling of discomfort of the operator when the transmission path is switched in a HMT or an EMT type power transmission device, and a control method for the work vehicle can be provided.

**List of Reference Numerals**

| | |
|---|---|
| 21: | Engine |
| 23: | Work implement pump |
| 3: | Work implement |
| 25: | Travel device |
| 24: | Power transmission device |
| 27: | Control unit |
| 61: | Input shaft |
| 63: | Output shaft |
| 68: | First planetary gear mechanism |
| 69: | Second planetary gear mechanism |
| 66: | Gear mechanism |
| MG1: | First motor |
| MG2: | Second motor |
| CH: | H-clutch |
| CL: | L-clutch |
| 27: | Control unit |
| 58: | Clutch control unit |
| 82: | Predicted engagement time determining unit |
| 83: | Speed ratio parameter estimating unit |
| 73: | First oil temperature detecting unit |
| 56: | Storage unit |
| 55: | Motor control unit |
| 84: | Target locus determining unit |

**Claims**

**1.** A work vehicle comprising:

an engine;
a hydraulic pump driven by the engine;
a work implement driven by hydraulic fluid discharged from the hydraulic pump;
a travel device driven by the engine;
a power transmission device that transmits driving power from the engine to the travel device; and
a control unit for controlling the power transmission device;
wherein,
the power transmission device has:

an input shaft;

an output shaft;

a gear mechanism that has a planetary gear mechanism and that transmits rotation of the input shaft to the output shaft; and

a motor connected to a rotating element of the planetary gear mechanism; and

a clutch for switching the transmission path for the driving power in the power transmission device from a first mode to a second mode; and,

the clutch is in a disengaged state when the transmission path is in the first mode;

the clutch is in an engaged state when the transmission path is in the second mode;

the power transmission device is configured so that a speed ratio of the output shaft with respect to the input shaft is changed by changing the rotation speed of the motor;

when a speed ratio parameter corresponding to the speed ratio is at a predetermined mode-switching threshold, a rotation speed ratio of the motor with respect to the input shaft in the first mode is equal to a rotation speed ratio of the motor with respect to the input shaft in the second mode; and

the control unit has a predicted engagement time determining unit, a speed ratio parameter estimating unit, and a clutch control unit;

when the clutch is in a disengaged state, the predicted engagement time determining unit determines a predicted engagement time which is a predicted value of the time required from a start of the engagement of the clutch until a completion of the engagement;

the speed ratio parameter estimating unit determines an estimated value for the speed ratio parameter after an elapse of the predicted engagement time from a current point in time; and

the clutch control unit outputs a clutch command signal for causing the clutch to be engaged when the estimated value of the speed ratio parameter reaches the mode-switching threshold.

2. The work vehicle according to claim 1, further comprising an oil temperature detecting unit, wherein the clutch is a hydraulic clutch,

the oil temperature detecting unit detects a temperature of hydraulic fluid supplied to the clutch;

the control unit further has a storage unit for storing predicted engagement time information for stipulating a relationship between an engagement time parameter including the temperature of the hydraulic fluid and the predicted engagement time; and

the predicted engagement time determining unit determines the predicted engagement time on the basis of the temperature of the hydraulic fluid detected by the oil temperature detecting unit and the predicted engagement time information.

3. The work vehicle according to claim 1 or 2, wherein the speed ratio parameter estimating unit records the speed ratio parameter at predetermined times, derives a rate of change of the speed ratio parameter from the recorded speed ratio parameters, and determines an estimated value of the speed ratio parameter from the rate of change of the speed ratio parameter.

4. The work according to any one of claims 1 to 3, wherein

the control unit has:

a motor control unit for controlling the motor;

a target locus determining unit for determining a target locus of changes of the speed ratio parameter from a point in time of a clutch command signal output until a point in time that the predicted engagement time has elapsed; and,

the motor control unit controls the motor so that the speed ratio parameter changes in accordance with the target locus during a period from the point in time of the clutch command signal output until the point in time that the predicted engagement time has elapsed.

5. The work vehicle according to any one of claims 1 to 4, wherein

a rate of change of the speed ratio with respect to the rotation speed of the motor in the first mode is different from a rate of change of the speed ratio with respect to the rotation speed of the motor in the second mode.

6. A control method for a work vehicle, the work vehicle including a power transmission device, wherein the power transmission device has:

an input shaft;

an output shaft;

a gear mechanism that has a planetary gear mechanism and that transmits rotation of the input shaft to the output shaft; and

a motor connected to a rotating element of the planetary gear mechanism; and

a clutch for switching the transmission path for the driving power in the power transmission device from a first mode to a second mode; and,

the clutch is in a disengaged state when the transmission path is in the first mode;

the clutch is in an engaged state when the transmission path is in the second mode;

the power transmission device is configured so that a speed ratio of the output shaft with respect to the input shaft is changed by changing the rotation speed of the motor;

when a speed ratio parameter corresponding to the speed ratio is at a predetermined mode-switching threshold, a rotation speed ratio of the motor with respect to the input shaft in the first mode is equal to a rotation speed ratio of the motor with respect to the input shaft in the second mode;

the control method comprising:

a step for determining, when the clutch is in a disengaged state, a predicted engagement time which is a predicted value of the time required from a start of the engagement of the clutch until a completion of the engagement.

a step for determining an estimated value for the speed ratio parameter after an elapse of the predicted engagement time from a current point in time; and

a step for outputting a clutch command signal for causing the clutch to be engaged when the estimated value for the speed ratio parameter reaches a mode-switching threshold value.

FIG. 1

FIG. 2

EP 2 963 316 A1

FIG. 3

EP 2 963 316 A1

FIG. 4

FIG. 5

# FIG. 6

81

INPUT
ROTATION
SPEED →

OUTPUT
ROTATION
SPEED →

| SPEED RATIO PARAMETER COMPUTING UNIT |

SPEED RATIO →

L-CLUTCH OIL
TEMPERATURE →

ENGINE
ROTATION
SPEED →

| PREDICTED ENGAGEMENT TIME DETERMINING UNIT |

PREDICTED
ENGAGEMENT
TIME →

82

83

| SPEED RATIO PARAMETER ESTIMATING UNIT |

→ ESTIMATED
SPEED
RATIO

# FIG. 7

SPEED
RATIO

MODE-SWITCHING
POINT

Rs1
Rs2
Rs_es1
Rs_es2

Rs_th1

Ls1

Ls2

t1   t2        t3

TIME

# FIG. 8

# FIG. 9

FIG. 10

FIG. 11

124

64 CAPACITOR

VF

61

62 166 65

CF

CR

VR

I2 INVERTER E

I1 INVERTER F

MG1

MG2

GH1

167 GH2

193

VH C

MG2

R1
Gm2
Gr1
C1

S1

P1

168

CL CH

VL D

191

GL1

GL2

170

192

71

63

37

FIG. 12

(a)

(b)

(c)

FIG. 13

## INTERNATIONAL SEARCH REPORT

| International application No. |
| --- |
| PCT/JP2014/082706 |

### A. CLASSIFICATION OF SUBJECT MATTER
See extra sheet.

According to International Patent Classification (IPC) or to both national classification and IPC

### B. FIELDS SEARCHED

Minimum documentation searched (classification system followed by classification symbols)
F16H61/08, B60K6/365, B60K6/387, B60K6/445, B60W10/02, B60W10/08, B60W20/00, E02F9/20, F16H3/46, F16H3/62, F16H3/72, F16H61/66, F16H63/50

| Documentation searched other than minimum documentation to the extent that such documents are included in the fields searched | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2000-130557 A (Yanmar Diesel Engine Co., Ltd.),<br>12 May 2000 (12.05.2000),<br>paragraphs [0022], [0027] to [0028], [0037] to [0039]; fig. 3 to 8<br>& US 6616559 B1         & EP 1146252 A1<br>& WO 2000/025041 A1     & CA 2347827 A | 1-3,5-6<br>4 |
| A | JP 2002-139125 A (Yanmar Agricultural Equipment Co., Ltd.),<br>17 May 2002 (17.05.2002),<br>paragraphs [0001] to [0011]<br>(Family: none) | 1-6 |

| ☒ Further documents are listed in the continuation of Box C. | ☐ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>02 March 2015 (02.03.15) | Date of mailing of the international search report<br>17 March 2015 (17.03.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2014/082706

C (Continuation).   DOCUMENTS CONSIDERED TO BE RELEVANT

| Category* | Citation of document, with indication, where appropriate, of the relevant passages | Relevant to claim No. |
|---|---|---|
| A | JP 61-59061 A  (Shimadzu Corp.), 26 March 1986 (26.03.1986), page 2, upper right column, line 9 to lower left column, line 18 (Family: none) | 1-6 |
| A | JP 2007-100553 A  (NSK Ltd.), 19 April 2007 (19.04.2007), paragraph [0014] (Family: none) | 2 |

Form PCT/ISA/210 (continuation of second sheet) (July 2009)

**INTERNATIONAL SEARCH REPORT**

International application No.

PCT/JP2014/082706

Continuation of A. CLASSIFICATION OF SUBJECT MATTER
  (International Patent Classification (IPC))

*F16H61/08*(2006.01)i, *B60K6/365*(2007.10)i, *B60K6/387*(2007.10)i,
*B60K6/445*(2007.10)i, *B60W10/02*(2006.01)i, *B60W10/08*(2006.01)i,
*B60W20/00*(2006.01)i, *E02F9/20*(2006.01)i, *F16H3/46*(2006.01)i,
*F16H3/62*(2006.01)i, *F16H3/72*(2006.01)i, *F16H61/66*(2006.01)i,
*F16H63/50*(2006.01)i

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006329244 A